# FASCICULE DE BREVET EUROPEEN

(11) **EP 2 993 881 B1**
(45) Date de publication et mention de la délivrance du brevet: **16.08.2017**
(21) Numéro de dépôt: 15184241.6
(22) Date de dépôt: 08.09.2015
(51) Int. Cl.: H04M 11/06, H04M 3/30, H04M 1/78, H04Q 1/02, H04M 1/02

(54) **DISPOSITIF DE TERMINAISON INTERIEUR**
INNERE ABSCHLUSSVORRICHTUNG
INNER TERMINATION DEVICE

(30) Priorité: 08.09.2014 FR 1458401
(43) Date de publication de la demande: 09.03.2016
(73) Titulaire: Nexans, 92400 Courbevoie (FR)
(72) Inventeur: MIART, Freddy, 08000 Charleville-Mézières (FR); DEVAUX, Julien, 08430 Launoy-sur-Vence (FR)
(74) Mandataire: Feray, Valérie

(56) Documents cités:
- EP-A2- 0 966 147
- WO-A1-2009/131675
- US-A- 6 026 160
- US-A1- 2009 314 907
- US-A1- 2011 128 708

## Description

La présente invention a pour objet un dispositif de terminaison intérieur.

Un dispositif de terminaison intérieur (appelé également DTI) est un boîtier implanté à l'entrée de l'installation d'un abonné. Il sépare et définit la démarcation entre la boucle locale d'un opérateur de télécommunication et le réseau intérieur de l'abonné. Il matérialise ainsi la limite de responsabilité entre les deux parties.

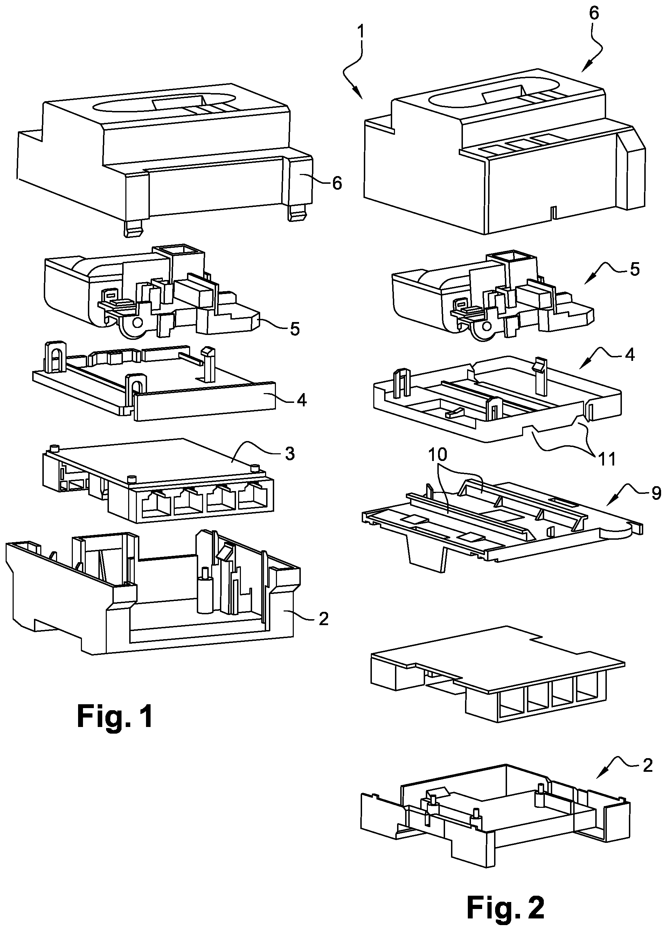

La boucle locale est la partie de la ligne téléphonique (paires de cuivre) allant du répartiteur de l'opérateur jusqu'à la prise de l'abonné. Le document US 6 026 160 A décrit un module diviseur avec un circuit diviseur xDSL qui peut être installé de manière amovible dans un dispositif d'interface réseau et interconnectable avec un module POTS dans le NID pour diviser le signal POTS et xDSL sur des paires de fils internes séparées terminées dans le NID. Le document EP 0 966 147 A2 décrit un ensemble diviseur XDSL intérieur. Le document US 2009/0314907 décrit un appareil de clôture de démarcation pour un dispositif de montage, par ex. un dispositif de distribution de signal et un dispositif de communication tel qu'un diviseur de câble, un bloc de masse, un amplificateur, un séparateur de signal, un combineur, un filtre dans un emplacement fixe. Le document US 2011/0128708 A1 décrit un module à balayage coaxial tel que le module de ligne universel (ULM), pour convertir un signal équilibré par exemple un signal à paire torsadée en un signal asymétrique comme un signal coaxial, engagé avec une base de répartiteur pour installation dans un dispositif d'interface réseau standard. Le document WO 2009/131675 A1 décrit une interface de démarcation xDSL universelle avec capacité multifonctionnelle et amélioration d'efficacité de signal. Tel qu'illustré à la figure 1, un dispositif de terminaison intérieur de l'état de la technique peut comprendre, de bas en haut, un couvercle inférieur 2, un circuit imprimé 3 qui réalise la fonction de diviseur de signal ou de filtre ADSL, le circuit imprimé 3 étant recouvert par un couvercle 4, un module 5 de connexion et de test, et un couvercle supérieur 6 qui recouvre le circuit imprimé 3, le couvercle 4 et le module 5 de connexion et de test. Le couvercle supérieur 6 se clippe sur le couvercle inférieur 2.

ADSL, pour « Asymmetric Digital Subscriber Line » en langue anglaise (liaison numérique asymétrique en langue française), désigne une technique de communication numérique. Le rôle des filtres ADSL est simple. Ils permettent de séparer le signal entre les basses fréquences utilisées par les appareils téléphoniques classiques et les hautes fréquences consacrées à la navigation Internet, le flux TV.

Le module 5 de connexion et de test est la pièce qui permet de connecter au moins une paire de conducteurs, typiquement en cuivre, d'un abonné à une paire de conducteurs d'un opérateur. Il peut par exemple permettre le raccordement par contacts auto-dénudant de :
- une paire en entrée
- trois paires en sortie abonné (désignées 1, 2 et test)

Il permet également d'assurer une fonction de test. Le dispositif de terminaison intérieur permet ainsi de vérifier un éventuel défaut sur la ligne situé du côté de l'opérateur.

La prise de test du dispositif de terminaison intérieur doit permettre la continuité entre la ligne de branchement et le câblage interne du logement. L'insertion d'une fiche de test doit isoler le câblage interne de la ligne de branchement et permettre de vérifier la présence des services côté branchement.

Pour effectuer la vérification, il suffit de connecter une prise appelée RJ 45, ce qui isole la ligne de l'abonné, permet de tester la boucle locale, et permet aussi à l'abonné de tester la présence de la tonalité. Cette action permet de localiser un éventuel défaut du côté de l'opérateur. La prise RJ 45 est ainsi une prise d'ouverture de ligne pour le test qui permet de localiser des défauts en amont du dispositif de terminaison intérieur. La référence « RJ » vient de l'anglais « Registered Jack » (prise jack enregistrée). La prise RJ 45 est un connecteur utilisé couramment pour les connexions Ethernet et qui comprend huit broches de connexions électriques. Le module 5 comprend ainsi une prise RJ 45 femelle 7 destinée à accueillir une prise RJ 45 mâle.

Le module 5 comprend un module d'essai RC 8 comprenant une résistance en série avec une capacité. Le module RC 8 permet d'effectuer le test à distance. Le module 5 peut comprendre en outre un module de protection parafoudre afin de protéger la ligne, les équipements et les utilisateurs contre les surtensions accidentelles.

Lors d'une intervention de maintenance, en cas de défaillance du module de connexion et de test, comme par exemple une déconnexion, une perturbation ou encore une détérioration de la ligne, la maintenance est délicate car dans ce dispositif de terminaison intérieur de l'état de la technique, le module de connexion et de test est intégré et est indissociable de l'ensemble. Ceci implique une intervention non conventionnelle pour changer le module de connexion et de test et ne permet pas de le remplacer par tout module de connexion et de test souhaitable, en particulier par un module de connexion et de test conforme à la norme UTE C 93-431.

L'invention vise à remédier à ces inconvénients.

L'invention a ainsi pour objet un dispositif de terminaison intérieur, comprenant :
- un premier module assurant une fonction de connexion d'une paire de conducteurs d'un abonné à une paire de conducteurs d'un opérateur de télécommunication et une fonction de test permettant de localiser un défaut sur la ligne téléphonique de l'abonné, et
- un deuxième module assurant une fonction de filtre ADSL ou une fonction de division de signal,

Dans le dispositif selon l'invention, le premier module et le deuxième module sont distincts et le deuxième module est recouvert de rails aptes à se fixer sur un support du premier module.

On peut ainsi facilement dissocier les deux modules et remplacer le premier module en cas de défaillance de celui-ci.

Le deuxième module comprend typiquement un circuit imprimé.

Le circuit imprimé peut être recouvert d'un couvercle muni desdits rails.

Le circuit imprimé peut être disposé sur un couvercle inférieur.

Les rails peuvent être clippés dans des encoches du support du premier module.

Le dispositif peut comprendre une prise femelle de test, typiquement une prise femelle RJ 45, apte à déconnecter le réseau du côté de l'abonné par insertion d'une prise mâle correspondante dans la prise femelle.

Le premier module peut comprendre un module de test comprenant une résistance en série avec une capacité.

Le premier module peut comprendre un module de protection parafoudre.

Le premier module peut être recouvert par un couvercle supérieur.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1, déjà décrite, est une vue en perspective éclatée d'un dispositif de terminaison intérieur de l'état de la technique,
- la figure 2 est une vue en perspective éclatée d'un dispositif de terminaison intérieur selon l'invention,
- les figures 3 et 4 sont des vues de détail du dispositif selon l'invention, et
- la figure 5 est une vue en perspective du dispositif selon l'invention.

Tel qu'illustré à la figure 2, sur laquelle les éléments identiques à ceux de la figure 1 portent les mêmes références, le dispositif de terminaison intérieur 1 selon l'invention comprend une pièce supplémentaire spécifique, à savoir une embase 9 qui va recouvrir le circuit imprimé 3. L'embase 9 est munie de deux rails parallèles 10 qui vont se clipper dans des logements 11 (des encoches) du couvercle 4. Le couvercle 4 constitue le support du module 5 de connexion et de test. L'embase 9 munie des rails 10 constitue une zone de fixation standard similaire à un rail DIN (pour « Deutsches Institut für Normung » en langue allemande). L'embase 9 peut être fixée sur le couvercle inférieur 2, par exemple par clippage.

Ainsi, on crée une interface standard entre le circuit imprimé 3 assurant les fonctions auxiliaires (filtre ADSL, diviseur de signal (« splitter » en langue anglaise)) et le module 5 de connexion et de test. Cette interface permet en cas de défaillance du module 5 de connexion et de test de changer le module 5 et de le remplacer par tout module 5 conforme à la norme UTE C 93-431. On n'a ainsi besoin que de changer le module 5 défaillant, le module 3 qui assure la fonction de filtre ADSL/diviseur de signal étant conservé.

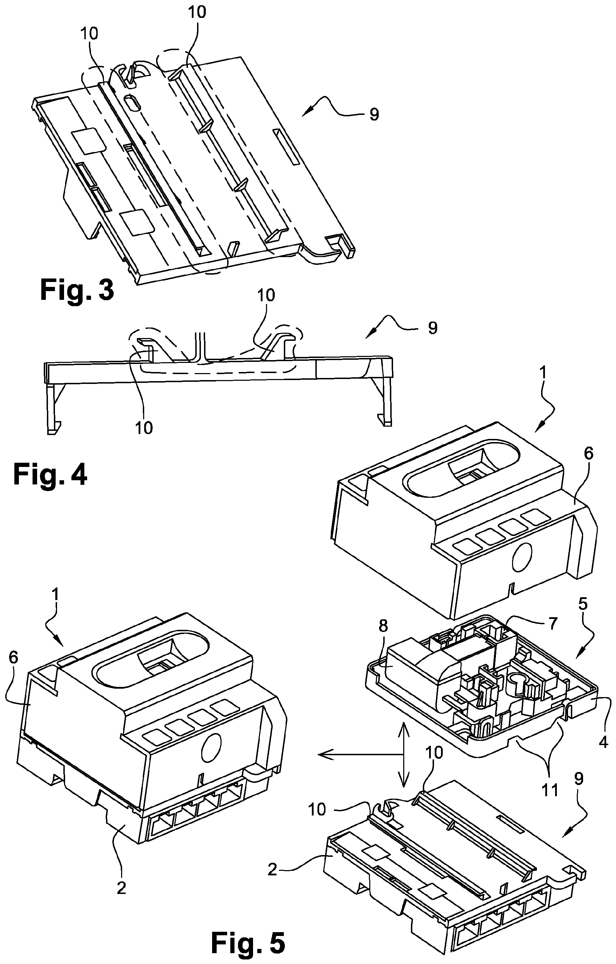

Les figures 3 et 4 sont des vues de détail de l'embase 9. Les rails 10 sont avantageusement munis chacun d'une ailette horizontale parallèle à l'embase 9 et qui facilite le clippage des rails 10 dans les logements 11.

## Revendications

1. Dispositif de terminaison intérieur (1), comprenant :
- un premier module (5) assurant une fonction de connexion d'une paire de conducteurs d'un abonné à une paire de conducteurs d'un opérateur de télécommunication et une fonction de test permettant de localiser un défaut sur la ligne téléphonique de l'abonné, et
- un deuxième module assurant une fonction de filtre ADSL ou une fonction de division de signal,
le dispositif (1) étant **caractérisé en ce que** le premier module (5) et le deuxième module forment deux éléments distincts superposés et **en ce que** le premier module (5) étant placé sur un support (4), il est configuré pour être assemblé de manière amovible au deuxième module par l'intermédiaire d'une embase (9) venant recouvrir le deuxième module, ladite embase (9) comportant des rails (10) configurés et agencés de façon à s'insérer dans des encoches (11) ménagées dans la paroi du support (4) pour venir se fixer sur ledit support.

2. Dispositif (1) selon la revendication 1, **caractérisé en ce que** le deuxième module comprend un circuit imprimé.

3. Dispositif (1) selon la revendication 2, **caractérisé en ce que**, le circuit imprimé (3) étant disposé sur un couvercle inférieur (2), l'embase (9) est fixée de façon amovible sur ledit couvercle inférieur.

4. Dispositif (1) selon la revendication 3, **caractérisé en ce que** l'embase (9) est fixée sur le couvercle inférieur (2) par clippage.

5. Dispositif (1) selon l'une des revendications 1 à 4, **caractérisé en ce que** les rails (10) de l'embase (9) sont clippés dans les encoches (11) du support (4) du premier module (5).

6. Dispositif (1) selon l'une des revendications 1 à 5, **caractérisé en ce qu'**il comprend une prise femelle de test (7) apte à déconnecter le réseau du côté de l'abonné par insertion d'une prise mâle correspondante dans la prise femelle (7).

7. Dispositif (1) selon l'une des revendications 1 à 6, **caractérisé en ce que** le premier module (5) comprend un module de test (8) comprenant une résistance en série avec une capacité.

8. Dispositif (1) selon l'une des revendications 1 à 7, **caractérisé en ce que** le premier module (5) comprend un module de protection parafoudre.

9. Dispositif (1) selon l'une des revendications 1 à 8, **caractérisé en ce que** le premier module (5) est recouvert par un couvercle supérieur (6).

## Patentansprüche

1. Interne Anschlusseinrichtung (1), umfassend:
ein erstes Modul (5), das eine Funktion der Verbindung eines Paars von Leitern eines Abonnenten mit einem Paar von Leitern eines Telekommunikationsanbieters und eine Testfunktion sicherstellt, die ermöglicht, einen Fehler in einer Telefonleitung des Abonnenten zu lokalisieren, und
ein zweites Modul, das eine ADSL-Filterfunktion oder eine Signalableitungsfunktion sicherstellt, wobei die Einrichtung (1) **dadurch gekennzeichnet ist, dass** das erste Modul (5) und das zweite Modul zwei verschiedene übereinander gelegte Elemente bilden, und dadurch, dass das erste Modul (5), das auf einem Träger (4) platziert ist, konfiguriert ist, um auf abnehmbare Weise auf das zweite Modul mit Hilfe eines Sockels (9) montiert zu sein, der das zweite Modul abdeckt, wobei der Sockel (9) Schienen (10) umfasst, die derart konfiguriert und angeordnet sind, um in Schlitze (11) eingeführt zu sein, die in der Wand des Trägers (4) angebracht sind, um auf dem Träger fixiert zu sein.

2. Einrichtung (1) nach Anspruch 1, **dadurch gekennzeichnet, dass** das zweite Modul eine erste Leiterplatte umfasst.

3. Einrichtung (1) nach Anspruch 2, **dadurch gekennzeichnet, dass**, da die Leiterplatte (3) auf einem unteren Deckel (2) angeordnet ist, der Sockel (9) auf abnehmbare Weise auf dem unteren Deckel fixiert ist.

4. Einrichtung (1) nach Anspruch 3, **dadurch gekennzeichnet, dass** der Sockel (9) auf dem unteren Deckel (2) durch Einrasten fixiert ist.

5. Einrichtung (1) nach einem der Ansprüche 1 bis 4, **dadurch gekennzeichnet, dass** die Schienen (10) des Sockels in den Schlitzen (11) des Trägers (4) des ersten Moduls (5) eingerastet sind.

6. Einrichtung (1) nach einem der Ansprüche 1 bis 5, **dadurch gekennzeichnet, dass** sie einen Test-Innenstecker (7) umfasst, der ausgelegt ist, um das Netz auf der Seite des Abonnenten durch Einführen eines entsprechenden Außensteckers in den Innenstecker (7) zu unterbrechen.

7. Einrichtung (1) nach einem der Ansprüche 1 bis 6, **dadurch gekennzeichnet, dass** das erste Modul (5) ein Testmodul (8) umfasst, umfassend einen Widerstand in Serie mit einer Kapazität.

8. Einrichtung (1) nach einem der Ansprüche 1 bis 7, **dadurch gekennzeichnet, dass** das erste Modul (5) ein Modul zum Blitzschutz umfasst.

9. Einrichtung (1) nach einem der Ansprüche 1 bis 8, **dadurch gekennzeichnet, dass** das erste Modul (5) von einem oberen Deckel (6) bedeckt ist.

## Claims

1. An interior termination device (1), comprising:
- a first module (5) performing a connection function of a pair of conductors of a subscriber to a pair of conductors of a telecommunications operator and a test function making it possible to localize a fault on the subscriber's telephone line, and
- a second module performing an ADSL filter function or a signal division function, the device (1) being **characterized in that** the first module (5) and the second module form two separate superimposed elements and **in that** the first module (5) being placed on a support (4), it is configured to be assembled removably to the second module via a base (9) covering the second module, said base (9) including rails (10) configured and arranged so as to be inserted in the notches (11) arranged in the wall of the support (4) to be fastened on said support.

2. The device (1) according to claim 1, **characterized in that** the second module comprises a printed circuit.

3. The device (1) according to claim 2, **characterized in that**, the printed circuit (3) being positioned on a lower cover (2), the base (9) is removably fastened on said lower cover.

4. The device (1) according to claim 3, **characterized in that** the base (9) is fastened on the lower cover (2) by clipping.

5. The device (1) according to one of claims 1 to 4, **characterized in that** the rails (10) of the base (9) are clipped in the notches (11) of the support (4) of the first module (5).

6. The device (1) according to one of claims 1 to 5, **characterized in that** it comprises a female test jack (7) able to disconnect the network from the subscriber side by inserting a corresponding male plug into the female jack (7).

7. The device (1) according to one of claims 1 to 6, **characterized in that** the first module (5) comprises a test module (8) comprising a resistance in series with the capacitance.

8. The device (1) according to one of claims 1 to 7, **characterized in that** the first module (5) comprises a lightning protection module.

9. The device (1) according to one of claims 1 to 8, **characterized in that** the first module (5) is covered by an upper cover (6).
